# EUROPÄISCHE PATENTANMELDUNG

(11) **EP 1 293 287 A2**
(43) Veröffentlichungstag der Anmeldung: **19.03.2003**
(21) Anmeldenummer: 02017219.3
(22) Anmeldetag: 31.07.2002
(51) Int. Cl.: B23K 26/073

(54) **Verfahren und Vorrichtung zur Laserbearbeitung mittels eines Laserstrahles**

(30) Priorität: 10.09.2001 DE 10144521
(71) Anmelder: LPKF Laser & Electronics AG, 30827 Garbsen (DE)
(72) Erfinder: Kusnezow, Gennadij, Dr.-Ing., 30853 Langenhagen (DE)
(74) Vertreter: Hagemann, Heinrich, Dr.

(57) **Zusammenfassung**

Die Erfindung betrifft ein für die Laserbearbeitung bestimmtes Verfahren und eine zur Durchführung vorgesehene Vorrichtung (1) zum Ausgleich einer in Richtung ihrer Hauptachsen (X, Y) unterschiedlichen Spotfläche (2) eines Laserstrahles (3). Hierzu wird aus dem zunächst gemeinsamen Laserstrahl (3) mittels eines Spaltungselementes (6) ein zweiter Laserstrahl (4) ausgekoppelt und durch Reflexion an einem Reflektor (7) mittels eines Vereinigungselementes (8) in die optische Achse (9) eingekoppelt. Durch die geneigte Anordnung des Reflektors (7), dessen Flächennormale (N) mit den Hauptachsen (X, Y) einen Winkel zwischen 0 und 90° einschließt, ist die Spotfläche (10) des zweiten Laserstrahles (4) gegenüber der ersten Spotfläche (2) verdreht, so daß durch die Überlagerung eine punktsymmetrische Gesamtfläche der überlagerten Spotflächen (2, 10) realisierbar ist. Hierdurch ist die Bearbeitung mittels der die Spotflächen (2, 10) bildenden Laserstrahlen (3, 4) unabhängig von der Vorschubrichtung.

## Beschreibung

Die Erfindung betrifft ein zur Laserbearbeitung mittels eines Laserstrahles bestimmtes Verfahren, durch welches eine von einer insbesondere punktsymmetrischen Idealform abweichende Spotfläche korrigiert wird. Weiterhin betrifft die Erfindung eine Vorrichtung zur Durchführung des Verfahrens.

Bei der Bearbeitung von Werkstücken mittels eines fokussierten Laserstrahles ist es in der Praxis für die Bearbeitungsqualität von entscheidender Bedeutung, welche Geometrie die Spotfläche in der Fokusebene auf dem Werkstück hat. Sofern diese Spotfläche von einer idealen Kreisform abweicht, wie dies beispielsweise durch eine ovale Form des Laserspots, bedingt durch verschiedene optische Aberationen der Laserquelle und / oder der Fokussieroptik, in der Praxis oftmals vorkommt, ist die Schnittfläche aufgrund der unterschiedlichen Abmessungen der Spotfläche des Laserstrahles in Richtung der beiden Hauptachsen von der Vorschubrichtung abhängig. Beispielsweise führt ein ovaler Laserspot, der entlang einer kreisförmigen Bewegungsbahn geführt wird, zu einer ovalen Bearbeitungszone und somit zu unzureichenden Bearbeitungsergebnissen.

Durch die ständig steigenden Anforderungen an die Laserbearbeitung, insbesondere hinsichtlich der Miniaturisierung, ist es erforderlich, die durch die ovale Spotfläche bedingten Fehlereinflüsse zu korrigieren. Hierdurch wird jedoch ein erheblicher Aufwand verursacht.

So kann die spotflächenbedingte Abweichung beispielsweise durch Korrekturwerte im Steuerprogramm ausgeglichen werden, um so beispielsweise in Abhängigkeit von der Vorschubrichtung eine korrigierte Bewegungsbahn einstellen zu können. Eine solche Lösung erfordert jedoch einen erheblichen Steuerungsaufwand, zumal der auftretende Spotflächenfehler bei jeder Laservorrichtung abweichend ausfallen kann. Daher müssen die Korrekturwerte zunächst bestimmt und bei jeder Änderung des Steuerungsprogramms entsprechend berücksichtigt werden.

Man könnte auch daran denken, den Laserstrahl gegenüber dem Werkstück durch ein optisches Element derart relativ drehbeweglich anzuordnen, daß die Lage der Hauptachsen der Spotfläche in Bezug auf die Vorschubrichtung konstant gehalten werden kann. Hierbei wirkt sich jedoch nachteilig aus, daß hierzu mechanische Stellglieder erforderlich sind, die im praktischen Einsatz selbst dann die Bearbeitungsgeschwindigkeit erheblich verzögern, wenn lediglich ein im Strahlengang angeordnetes optisches Element zur Drehbewegung des Laserstrahles bewegt wird.

Der Erfindung liegt daher die Aufgabe zugrunde, ein Verfahren zu schaffen, durch welches eine einfache Korrektur bzw. die Punktsymmetrie der Spotfläche herbeigeführt werden kann. Insbesondere soll das Verfahren dabei ohne mechanische Stellglieder oder Änderungen des Steuerprogramms durchführbar sein. Weiterhin soll eine Vorrichtung zur Durchführung des Verfahrens geschaffen werden.

Die erstgenannte Aufgabe wird erfindungsgemäß mit einem Verfahren gemäß den Merkmalen des Patentanspruchs 1 gelöst.

Erfindungsgemäß ist also ein Verfahren vorgesehen, bei dem der ersten Spotfläche eine zweite, gegenüber dieser um die optische Achse gedrehte Spotfläche überlagert wird, indem der Laserstrahl zunächst in einen ersten Laserstrahl und einen zweiten, die zweite Spotfläche bildenden Laserstrahl aufgespaltet und nach einer Reflexion an einem gegenüber den Hauptachsen geneigten Reflektor, dessen Flächennormale mit den Hauptachsen einen Winkel zwischen 0 und 90° einschließt, zu dem gemeinsamen Laserstrahl (3) vereinigt wird. Hierdurch wird der ersten Spotfläche eine zweite, insbesondere kongruente Spotfläche überlagert, wobei die zweite Spotfläche gegenüber der ersten Spotfläche um die optische Achse gedreht ist. Auf diese Weise wird eine punktsymmetrische Gesamtfläche durch die überlagerten Spotflächen begrenzt, so daß die Bearbeitung eines Werkstückes von der Vorschubrichtung der Vorrichtung weitgehend unabhängig ist. Hierbei entfallen insbesondere Korrekturmaßnahmen für das Steuerprogramm sowie Stellglieder. Die Vorrichtung ist dadurch mit geringem Aufwand realisierbar.

Besonders einfach ist auch eine Ausgestaltung des erfindungsgemäßen Verfahrens, bei welcher der zweite Laserstrahl in einer von den Ebenen der Hauptachsen der ersten Spotfläche abweichenden Richtung derart ausgekoppelt wird, daß die zweite Spotfläche gegenüber der ersten Spotfläche um die optische Achse um 90° gedreht ist. Hierdurch werden in einfacher Weise die beiden Spotflächen einander überlagert, so daß deren Hauptachsen jeweils um 90° relativ zueinander gedreht ausgerichtet sind. Die überlagerte Spotfläche weist dabei lediglich geringe Abweichungen von einer idealen Kreisform auf, die in der Praxis eine wesentlich verbesserte Genauigkeit bei der Lasereinflußzone aufweist.

Die zweite Aufgabe der Erfindung, eine bei der Laserbearbeitung einsetzbare Vorrichtung zur Korrektur einer in Richtung von zwei Hauptachsen von einer Idealform abweichenden Spotfläche eines Laserstrahles zu schaffen, wird erfindungsgemäß durch ein Spaltungselement zum Abspalten des zweiten Laserstrahles aus dem Strahlengang des gemeinsamen Laserstrahles in Richtung eines gegenüber den Hauptachsen geneigten Reflektors, dessen Flächennormale mit den Hauptachsen einen Winkel zwischen 0 und 90° einschließt, und ein Vereinigungselement zur Vereinigung eines zweiten Laserstrahls mit einer zweiten, um eine optische Achse gedrehten Spotfläche mit dem ersten Laserstrahl zu dem gemeinsamen Laserstrahl, gelöst Durch die Überlagerung der beiden insbesondere kongruenten Spotflächen wird eine punktsymmetrische Gesamtfläche begrenzt, die dadurch weitgehend unabhängig von einer Vorschubrichtung der Vorrichtung ist. Die Bearbeitung eines Werkstückes mit der Vorrichtung wird dadurch wesentlich erleichtert, wobei insbesondere auf Korrekturmaßnahmen für das Steuerprogramm ebenso wie auf Stellglieder zur schwenkbaren Anordnung des Laserstrahles verzichtet werden kann. Der zweite Laserstrahl wird dabei aus dem zunächst gemeinsamen Strahlengang des ersten Laserstrahles abgespaltet und in Richtung des Reflektors gelenkt. Von dort gelangt der Laserstrahl zu dem Vereinigungselement, durch welches der erste und der zweite Laserstrahl in Richtung der optischen Achse zu dem gemeinsamen Laserstrahl vereinigt werden. Durch die Ablenkung des zweiten Laserstrahles abweichend von den Hauptachsen wird eine Drehung der voneinander abweichenden Achse der Spotfläche erreicht, so daß die beiden Spotflächen des ersten und des zweiten Laserstrahles einander überlagert sind.

Eine weitere besonders zweckmäßige Abwandlung der vorliegenden Erfindung wird dadurch erreicht, daß der Reflektor als ein hochreflektierender Planspiegel ausgeführt ist, wodurch eine weitgehend verlust- und verschleißfreie Umlenkung des Laserstrahles sichergestellt wird.

Eine besonders vorteilhafte Ausführungsform der Erfindung wird dadurch erreicht, daß die Flächennormale des Reflektors mit den Hauptachsen einen Winkel von 45° einschließt. Hierdurch ist die zweite Spotfläche relativ zu der ersten Spotfläche um 90° gedreht, wodurch sich eine im wesentlichen punktsymmetrische Begrenzungsfläche der überlagerten Spotflächen ergibt. Die überlagerte Spotfläche eignet sich dadurch in optimaler Weise zur Bearbeitung eines Werkstückes, weil diese im wesentlichen unabhängig von der Vorschubrichtung bei der Laserbearbeitung ist.

Das Aus- bzw. Vereinigungselement kann durch einen halbdurchlässigen Spiegel gebildet sein. Besonders praxisnah ist jedoch auch eine Ausgestaltung der vorliegenden Erfindung, bei welcher das Spaltungselement und / oder Vereinigungselement einen Polarisator aufweist. Hierdurch wird ein möglicher mit der Aus- und Einkopplung des zweiten Laserstrahles verbundener Leistungsverlust weitgehend verhindert. Die Gesamtintensität der beiden Laserstrahlen entspricht dadurch annähernd der Intensität des Ursprungsstrahles vor der Auskopplung des zweiten Laserstrahles.

Eine andere besonders praxisnahe Abwandlung wird dadurch geschaffen, daß die Vorrichtung um die optische Achse schwenkbar ist. Hierdurch kann der relative Winkel zwischen den überlagerten Spotflächen durch eine Drehung bzw. durch eine Festlegung in unterschiedlichen Winkelstellungen bezüglich der optischen Achse auf das gewünschte Maß eingestellt werden. Insbesondere läßt sich so bereits herstellerseitig ein 90°-Winkel einstellen, durch den die Spotflächen zu einer punktsymmetrischen Gesamtfläche überlagert werden.

Eine weitere besonders zweckmäßige Ausführungsform der Erfindung wird auch dann geschaffen, wenn die Vorrichtung ein im Strahlengang vor dem Spaltungselement angeordnetes Verzögerungsplättchen aufweist. Dieses ist insbesondere durch eine Rotation um die optische Achse derart einstellbar, daß auch bei unpolarisiertem oder lediglich teilweise polarisiertem Licht eine übereinstimmende Intensität der beiden Laserstrahlen einstellbar ist.

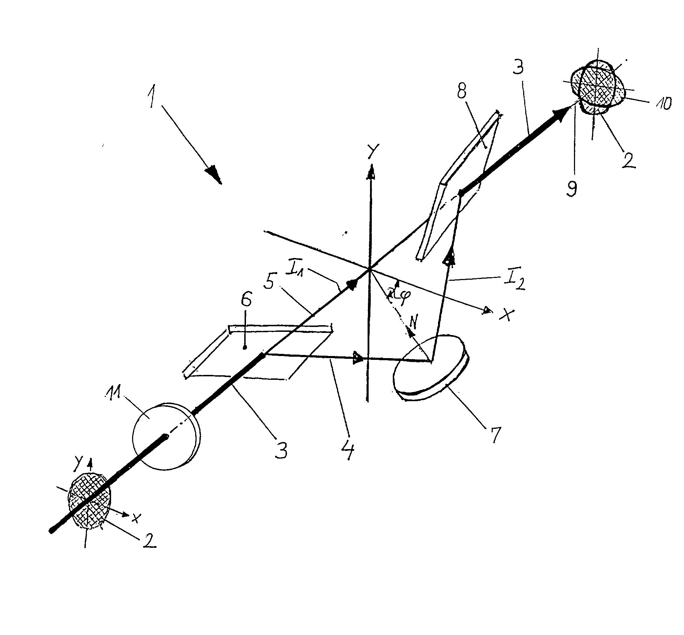

Die Erfindung läßt verschiedene Ausführungsformen zu. Zur weiteren Verdeutlichung ihres Grundprinzips ist eine davon in der Zeichnung dargestellt und wird nachfolgend anhand einer perspektivischen Darstellung der erfindungsgemäßen Vorrichtung 1 beschrieben. Dargestellt ist zunächst eine Spotfläche 2 eines gemeinsamen Laserstrahles 3, wobei die Spotfläche 2 entsprechend ihrer ovalen Geometrie verschiedene Leistungs- und /oder Winkelverteilungen des Laserstrahles 3 in Richtung ihrer Hauptachsen X und Y aufweist. Aufgrund dieser asymmetrischen Leistungsverteilung in der Fokussierebene ist für die Laserbearbeitung mittels des Laserstrahles 3 eine Korrektur der Spotfläche 2 erforderlich, da anderenfalls der Einsatz des Lasers in Abhängigkeit von der Vorschubrichtung zu unterschiedlichen Ergebnissen führt. Zur Korrektur der Spotfläche 2 wird der Laserstrahl 3 in einen ersten Laserstrahl 4 und einen zweiten, einer optischen Achse 9 folgenden Laserstrahl 5 mittels eines als Polarisator ausgeführten Spaltungselementes 6 aufgespaltet und nach einer Reflexion an einem als Spiegel ausgeführten Reflektor 7 mittels eines ebenfalls als Polarisator ausgeführten Vereinigungselementes 8 wieder in den Strahlengang des ersten Laserstrahles 3 entlang einer optischen Achse 9 eingekoppelt. Der Reflektor 7 ist dabei derart gegenüber den Hauptachsen X, Y so angeordnet, daß die Flächennormale N des Reflektors 7 einen Winkel ϕ mit der Hauptachse X einschließt. Dieser Winkel ϕ führt zu einer relativen Verdrehung einer zweiten Spotfläche 10 gegenüber der Spotfläche 2 des ersten Laserstrahles 3 mit dem Winkel 2ϕ. Im dargestellten Beispiel, bei dem der Winkel ϕ = 45° entspricht, führt dies zu einer punktsymmetrischen Überlagerung der beiden dadurch um 90° zueinander verdrehten Spotflächen 2, 9, wobei die Intensitäten I₁, I₂ der beiden Laserstrahlen 3, 4 im wesentlichen übereinstimmen. Zur Einstellung des Winkels ϕ ist die Vorrichtung 1 um die optische Achse 9 schwenkbar angeordnet, so daß eine beliebige Überlagerung der beiden Spotflächen 2, 10 einstellbar ist. In dem Strahlengang ist vor dem Spaltungselement 6 ein Verzögerungsplättchen 11 angeordnet, welches insbesondere durch eine Rotation um die optische Achse 9 derart einstellbar ist, daß auch bei unpolarisiertem oder lediglich teilweise polarisiertem Laserlicht eine übereinstimmende Intensität I₁, I₂ der beiden Laserstrahlen 4, 5 einstellbar ist.

## Patentansprüche

1. Ein zur Laserbearbeitung mittels eines Laserstrahles (3) bestimmtes Verfahren, durch welches eine von einer insbesondere punktsymmetrischen Idealform abweichende Spotfläche (2) korrigiert wird, **dadurch gekennzeichnet, daß** der ersten Spotfläche (2) eine zweite, gegenüber dieser um die optische Achse (9) gedrehte Spotfläche (10) überlagert wird, indem der Laserstrahl (3) zunächst in einen ersten Laserstrahl (5) und einen zweiten, die zweite Spotfläche (10) bildenden Laserstrahl (4) aufgespaltet und nach einer Reflexion an einem gegenüber den Hauptachsen (X, Y) geneigten Reflektor (7), dessen Flächennormale (N) mit den Hauptachsen (X, Y) einen Winkel zwischen 0 und 90° einschließt, zu dem gemeinsamen Laserstrahl (3) vereinigt wird.

2. Verfahren nach Anspruch 1, **dadurch gekennzeichnet, daß** der zweite Laserstrahl (4) in einer von den Ebenen der Hauptachsen (X, Y) der ersten Spotfläche (2) abweichenden Richtung derart von dem zunächst gemeinsamen Laserstrahl (3) abgespaltet wird, daß die zweite Spotfläche (10) gegenüber der ersten Spotfläche (2) um die optische Achse (9) um 90° gedreht ist.

3. Bei der Laserbearbeitung einsetzbare Vorrichtung (1) zur Korrektur einer in Richtung von zwei Hauptachsen (X, Y) von einer punktsymmetrischen Idealform abweichenden Spotfläche (2) eines Laserstrahles (3), **gekennzeichnet durch** ein Spaltungselement (6) zum Abspalten des zweiten Laserstrahles (4) aus dem Strahlengang des gemeinsamen Laserstrahles (3) in Richtung eines gegenüber den Hauptachsen (X, Y) geneigten Reflektors (7), dessen Flächennormale (N) mit den Hauptachsen (X, Y) einen Winkel zwischen 0 und 90° einschließt, und ein Vereinigungselement (8) zur Vereinigung eines zweiten Laserstrahls (4) mit einer zweiten, um eine optische Achse (9) gedrehten Spotfläche (10) mit dem ersten Laserstrahl (3) zu dem gemeinsamen Laserstrahl (3).

4. Vorrichtung (1) nach Anspruch 3, **dadurch gekennzeichnet, daß** der Reflektor (7) als ein hochreflektierender Planspiegel ausgeführt ist.

5. Vorrichtung (1) nach Anspruch 3 oder 4, **dadurch gekennzeichnet, daß** die Flächennormale (N) des Reflektors (7) mit den Hauptachsen (X, Y) einen Winkel von 45° einschließt.

6. Vorrichtung (1) nach zumindest einem der Ansprüche 3 bis 5, **dadurch gekennzeichnet, daß** das Spaltungselement (6) und / oder Vereinigungselement (8) einen Polarisator aufweist.

7. Vorrichtung (1) nach zumindest einem der Ansprüche 3 bis 6, **dadurch gekennzeichnet, daß** die Vorrichtung (1) um die optische Achse (9) schwenkbar ist.

8. Vorrichtung (1) nach zumindest einem der Ansprüche 3 bis 7, **dadurch gekennzeichnet, daß** die Vorrichtung (1) ein im Strahlengang vor dem Spaltungselement (6) angeordnetes Verzögerungsplättchen (11) aufweist.
